# EUROPÄISCHE PATENTSCHRIFT

(11) **EP 0 732 865 B1**
(45) Veröffentlichungstag und Bekanntmachung des Hinweises auf die Patenterteilung: **18.12.2002**
(21) Anmeldenummer: 96102818.0
(22) Anmeldetag: 26.02.1996
(51) Int. Cl.: H05B 3/84, B60R 1/06, H05B 3/14

(54) **Formkörper mit Heizeinrichtung, insbesondere Aussenrückblickspiegel eines Kraftfahrzeugs**
Moulding including a heating arrangement, especially for a rear view mirror
Corps moulé comportant un dispositif de chauffage, en particulier un rétroviseur pour automobile

(30) Priorität: 14.03.1995 DE 19509153
(43) Veröffentlichungstag der Anmeldung: 18.09.1996
(73) Patentinhaber: Bayerische Motoren Werke Aktiengesellschaft, 80788 München (DE); Piringer, Helmut, 85598 Baldham (DE)
(72) Erfinder: Mayr, Wolfgang, 80997 München (DE); Piringer, Helmut, 85598 Baldham (DE)

(56) Entgegenhaltungen:
- EP-A- 0 123 540
- DE-A- 2 826 974
- DE-A- 4 016 847
- FR-A- 2 137 457

## Beschreibung

Die Erfindung betrifft einen Formkörper mit Heizeinrichtung, insbesondere Außenrückblickspiegel eines Kraftfahrzeugs, mit den im Oberbegriff des Patentanspruches 1 angegebenen Merkmalen.

Ein derartiger Formkörper mit Heizeinrichtung ist durch die DE-OS 23 06 271 bekannt, der eine Widerstandsheizmatte mit einem elektrisch beheizbaren Heizelement aus Kohlenstoff- und nicht schmelzbaren Fasern aufweist. Die Kohlenstoff- und nicht schmelzbaren Fasern sind mit einem wärmehärtenden Kunststoff imprägniert und von einer Bindeschicht, die durch eine thermoplastische Folie gebildet ist und einer Deckschicht aus einer Polyesterfolie bedeckt. Durch Heißpressung werden die Schichten zu einem einteiligen Körper geformt, wobei Kunststoff in die Freiräume zwischen den Kohlenstoff-Fasern eindringt. Besonders nachteilig ist, daß nur wenige Kunststoffe durch Heißpressung mit den Kohlenstoff-Fasern zu verbinden sind. Die Verbindung ist nicht intensiv, da der Kunststoff lediglich in die Zwischenräume der Kohlenstoff-Fasern eindringt, diese jedoch nicht hintergreift. Die Haltbarkeit des Formkörpers ist deshalb eingeschränkt. Um die Kohlenstoff-Fasern von beiden Seiten zu isolieren, ist auf jeder Seite der vliesartig angeordneten Kohlenstoff-Fasern durch Heißpressung ein geeigneter Kunststoff mit den Kohlenstoff-Fasern zu verbinden. Die Widerstandsheizmatte ist eben ausgebildet und lediglich zur Beheizung von Wänden beispielsweise an Beton-Neubauten oder zur Bodenbeheizung vorgesehen. Die Widerstandsheizmatte soll auch zur Beheizung von unebenen Oberflächen geeignet sein, die jedoch aufgrund der ebenen Ausbildung der Widerstandsheizmatte keine übermäßigen Krümmungen aufweisen dürfen.

In der DE 42 33 118 A1 ist eine Heizmatte angegeben, die aus einem flexiblen Gewebe mit Kohlenstoff-Fasern besteht. Das Gewebe weist gitterartig in zwei etwa zueinander senkrechte Hauptrichtungen verlaufende Fasern auf, die jeweils mit einem Abstand voneinander in der zugeordneten Hauptrichtung parallel verlaufen. Durch den Abstand zwischen den Kohlenstoff-Fasern wird der dazwischenliegende Bereich der Heizmatte weniger und erst nach einiger Zeit erwärmt, wodurch sich eine ungleichmäßige Wärmeverteilung ergibt.

Der Erfindung liegt die Aufgabe zugrunde, einen Formkörper mit Heizeinrichtung nach dem Oberbegriff des Patentanspruches 1 anzugeben, der einen Bereich des Formkörpers schnell erwärmen kann und mit unterschiedlicher Formgebung kostengünstig herzustellen ist.

Diese Aufgabe ist durch die im Patentanspruch 1 angegebenen Merkmale gelöst.

Besonders vorteilhaft ist, daß die Carbonfasern sehr nahe an dem von der Heizeinrichtung zu erwärmenden Bereich angeordnet sein können, wodurch dieser Bereich schnell und mit einer geringen Energiezufuhr zu erwärmen ist. Durch das Spritzgießverfahren kann die Kunststoffschicht, die den zu erwärmenden Bereich von den Carbonfasern trennt, eine lediglich wenige Hundertstel Millimeter entsprechende Materialstärke aufweisen. Der Formkörper kann mit sehr unterschiedlicher Formgebung gefertigt sein. Er wird beim Spritzgießen in seine Form gebracht, wobei Kunststoff durch die Freiräume zwischen den Carbonfasern hindurch die Carbonfasern hintergreift und an der Rückseite eine isolierende Schicht bildet. Der beim Spritzgießverfahren verwendete Kunststoff umhüllt gleichzeitig die Carbonfasern, wodurch keine zusätzliche Isolierschicht erforderlich ist. Die für das Spritzgießverfahren erforderlichen Freiräume zwischen den Carbonfasern sind gering und bereits bei vliesartig übereinander angeordneten Carbonfasern gebildet. Es ist lediglich ein geeignetes Bindemittel zur Versteifung der Carbonfasern zu verwenden, das einerseits die Carbonfasern so zusammenhält, daß das Spritzgießverfahren anwendbar ist und andererseits die Freiräume offen hält, damit Kunststoff beim nachfolgenden Spritzgießverfahren durch die Freiräume hindurch die Carbonfasern hintergreifen und eine geschlossene Schicht bilden kann.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Fig. 1: ein erstes Ausführungsbeispiel, das einen Außenrücklickspiegel eines Kraftfahrzeugs im Querschnitt darstellt,
- Fig. 2: eine Draufsicht auf die vliesartig angeordneten Carbonfasern in Fig. 1 und
- Fig. 3: ein zweites Ausführungsbeispiel eines Formkörpers.

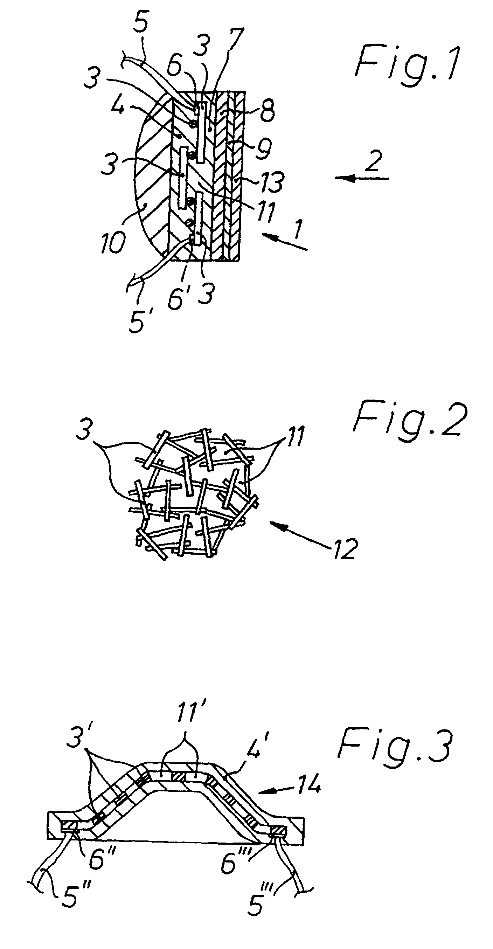

Das in Fig. 1 dargestellte erste Ausführungsbeispiel soll vereinfacht einen Außenrückblickspiegel 1 eines Kraftfahrzeugs im Querschnitt abbilden, wobei die Blickrichtung auf den Außenrückblickspiegel 1 durch den Pfeil 2 angegeben ist. Der Außenrückblickspiegel 1 weist eine Heizeinrichtung auf, die stromleitend verbundene und von einem nicht dargestellten Bindemittel versteifte Carbonfasern 3 aufweist. Die Carbonfasern 3 sind ungeordnet oder allenfalls durch das Fertigungsverfahren bedingt geordnet angeordnet und bilden ein Vlies mit einem Flächengewicht von etwa 20 bis 40 g/m². Das Vlies kann dadurch gefertigt sein, daß Carbonfasern auf einen Binder, beispielsweise auf Zellulosebasis gestreut und nach einem Trocknungsprozeß durch Walzen verdichtet werden. Ein derartiges Vlies kann aber auch von der Firma Sigri Great Lakes Carbon GmbH bezogen werden, wobei die Dicke des Vlieses möglicherweise noch nicht geeignet ist um einen gewünschten Widerstand für den beim Aufheizen hindurchfließenden elektrischen Strom zu erreichen. Der die Carbonfasern 3 stromleitend zusammenhaltende Binder ist bei dem Ausführungsbeispiel Polyvinylalkohol. Dieser Binder ist noch nicht ausreichend für einen stromleitenden Zusammenhalt der Carbonfasern für das nachfolgende Spritzgießverfahren. Die von dem Binder zusammengehaltenen Carbonfasern sind deshalb noch von einem Bindemittel versteift, das eine Anwendung des nachfolgenden Spritzgießverfahrens ermöglicht, bei dem die Carbonfasern von einem Kunststoff durch die Freiräume zwischen den Carbonfasern hindurch hinterspritzt werden und dabei in stromleitendem Kontakt bleiben. Das die Carbonfasern 3 versteifende Bindemittel ist beispielsweise das von der Firma Höchst zu beziehende Veredelungsmittel Cassurit STM. Dieses in der Figur ebenfalls nicht dargestellte Bindemittel verschließt die Freiräume zwischen den Carbonfasern 3 nicht oder allenfalls unwesentlich. Der für das Spritzgießverfahren verwendete Kunststoff 4 umhüllt die Carbonfasern 3 bis auf Stromanschlußleitungen 5, 5', die über jeweils eine Silberleitbahn 6, 6' mit einem Randbereich der Carbonfasern 3 verbunden sind. Der die Carbonfasern 3 einschließende Kunststoff 4 bildet allseitig eine Isolierschicht und kann thermoplastisch, duroplastisch, elastomer oder gelartig sein. Auf die beispielsweise wenige Hundertstel Millimeter dicke Schicht 7 des Kunststoffes 4 ist mit einer Dicke von etwa 0,05 mm oder dicker ein Zweikomponenten-Silikonkautschuk aufgebracht, der beispielsweise von der Firma Wacker-Chemie als SilGel 612 zu beziehen ist. Auf diese Haftschicht 8 ist ein dünnes Glas, das beispielsweise eine Dicke zwischen 0,04 bis 1,5 mm aufweist aufgebracht, die an ihrer dem Spiegelbetrachter abgewandten Seite mit einer Reflexionsschicht 9 versehen ist. Der bei dem Ausführungsbeispiel plattenartige Kunststoff 4 ist in vereinfacht dargestellter Weise an einem Spiegelgehäuse 10 befestigt.

Eine Prinzipskizze der in Fig. 1 vereinfacht dargestellten Carbonfasern 3 stellt Fig. 2 dar, in der die Zwischenräume 11 zwischen den einzelnen Carbonfasern 3 übertrieben groß dargestellt sind. Die Figur soll veranschaulichen, daß die bei dem Ausführungsbeispiel mit einer Faserlänge von etwa 5 bis 15 mm gefertigten Carbonfasern 3 ungeordnet zu einem Vlies übereinander angeordnet sind. Die Carbonfasern 3 weisen einen Durchmesser von etwa 5 bis 10 µm auf und sind von der Firma Sigri Great Lakes Carbon GmbH auch als Roving mit etwa 40.000 Einzelfasern erhältlich. Das Vlies weist bei dem Ausführungsbeispiel eine solche Dicke auf, daß der elektrische Widerstand der Carbonfasern 3 etwa 3 bis 4 Ohm beträgt, wodurch sich bei einer angelegten Gleichspannung von 12 Volt ein elektrischer Strom in den Carbonfasern 3 von etwa 3 bis 4 Ampere ergibt. Dieser Strom bewirkt einerseits eine schnelle Aufheizung der äußeren Schicht aus Glas 13 über die dazwischenliegenden dünnen Schichten, wodurch sich eventueller Niederschlag auf dem Glas 13 rasch auflöst.

Die Heizeinrichtung des Formkörpers weist eine nicht dargestellte Regelungseinrichtung auf, die den zu erwärmenden Bereich des Formkörpers in Abhängigkeit von der Umgebungstemperatur und/oder von der Temperatur des zu erwärmenden Bereiches heizt. In der Stromleitung von oder zu den Carbonfasern 3 ist ein Widerstandselement angeordnet, das seinen elektrischen Widerstand in Abhängigkeit vom elektrischen Strom in den Carbonfasern 3 oder in Abhängigkeit seiner Temperatur verändert. Das Widerstandselement kann ein Kaltleiter (PTC) oder ein strom- bzw. temperaturabhängig wirkender Schalter sein. Ebenso ist es möglich, daß eine beispielsweise mäanderförmig ausgebildete Leiterbahn oder ein Graphitpartikel enthaltender Kunststoff oder dergleichen dieses Widerstandselement bildet.

Ein zweites Ausführungsbeispiel ist in Fig. 3 dargestellt, das ein beliebiges Formteil 14 verkörpern soll, das über eine Carbonfasern 3' aufweisende Heizeinrichtung zu erwärmen ist. Der Formkörper 14 ist in ähnlicher Weise wie der in Fig. 1 angegebene Formkörper gebildet. Nach Fig. 3 sind die Carbonfasern 3' in einem Spritzgießverfahren mit einem Kunststoff 4' hinterspritzt und bis auf Stromanschlußleitungen 5", 5'" von dem Kunststoff 4' umschlossen. Das Formteil 14 ist bei dem Spritzgießverfahren in seine Form gebracht. Es ist auch möglich, daß die von einem nicht dargestellten Bindemittel verfestigten Carbonfasern 3' vor dem Spritzgießverfahren vorgeformt werden. Die Stromanschlußleitungen 5", 5'" sind über Silberleitbahnen 6", 6'" jeweils mit einem Randbereich der Carbonfasern 3' verbunden. Ebenso können die Carbonfasern über leitfähige Kleber oder Leitlacke mit Stromanschlußleitungen oder dergleichen verbunden sein.

Die Erfindung kann auch von den beiden Ausführungsbeispielen abweichend realisiert werden. Die Gestalt des Formkörpers ist an sich beliebig vorzugeben und lediglich durch die Gestaltungsmöglichkeit des beim Spritzgießverfahren verwendeten Werkzeugs eingeschränkt. Das Vlies kann vorzugsweise lediglich Carbonfasern und auch Beimengungen wie Glasfasern enthalten. Die Carbonfasern können auch durch Carbonisieren der Oberfläche von Fäden bzw. Fasern eines Trägerwerkstoffes beispielsweise aus Kunststoff gebildet sein. Die Vliesdicke oder -dichte sowie die Abmessungen der Carbonfasern können an die jeweiligen Bedürfnisse angepaßt sein. Die Dicke der die Carbonfasern umgebenden Schicht kann beispielsweise auf der Vorderund Rückseite unterschiedlich ausgebildet sein, wobei zumindest auf einer Seite sehr kleine Wandstärken mit wenigen Hundertstel Millimetern auszuführen sind. Der Formkörper ist vielseitig verwendbar und stationär oder mobil einsetzbar. Durch Auswahl des beim Spritzgießverfahren verwendeten Kunststoffes kann festgelegt werden, ob das Formteil eine feste Gestalt aufweist oder elastisch bzw. gelartig ist. Bei Verwendung des Formkörpers als Sitzauflage oder -unterlage dürfte ein elastischer bzw. gelartiger Kunststoff besonders vorteilhaft sein. Nach der Versteifung der Carbonfasern durch das Bindemittel und gegebenenfalls einem zuvor aufgebrachten Binder können die Freiräume zwischen den Carbonfasern von einer dünnen Schicht ganz oder teilweise bedeckt sein, wenn der Kunststoff beim Spritzgießverfahren die Freiräume durchdringen und dabei die dünne Schicht aus den Freiräumen drängen kann.

## Patentansprüche

1. Formkörper mit Heizeinrichtung, insbesondere Außenrückblickspiegel eines Kraftfahrzeugs, mit einer Heizschicht, die stromleitend verbundene und von einem Bindemittel versteifte Carbonfasern aufweist, die mit Stromanschlüssen versehen und in einem Preßverfahren durch einen Kunststoff verstärkt sind, der in die Freiräume zwischen den Carbonfasern eindringt, die vliesartig übereinander angeordnet sind,
**dadurch gekennzeichnet, daß** nach der Versteifung der Carbonfasern (3, 3') durch das Bindemittel die Freiraume (11, 11') offen bzw. lediglich von einer dünnen Schicht teilweise oder ganz geschlossen sind, und daß bei einem als Spritzgießverfahren durchgefuhrten Preßverfahren der durch die Freiräume (11, 11') dringende und gegebenenfalls dabei die dünne Schicht aus den Freiräumen (11, 11') drängende Kunststoff (4, 4') die Carbonfasern (3, 3') hinterspritzt.

2. Formkörper nach Anspruch 1,
**dadurch gekennzeichnet, daß** der Kunststoff (4, 4') eine die Carbonfasern (3, 3') einschließende Isolierschicht bildet.

3. Formkörper nach Anspruch 1 oder 2,
**dadurch gekennzeichnet, daß** der Kunststoff (4, 4') thermoplastisch, duroplastisch, elastomer oder gelartig ist.

4. Formkörper nach einem der Ansprüche 1 bis 3, mit durch kurze Einzelfasern gebildeten Carbonfasern
**dadurch gekennzeichnet, daß** die Einzelfasern (Carbonfasern 3, 3') vor der Versteifung durch das Bindemittel von einem Binder in stromleitendem Kontakt gehalten sind.

5. Formkörper nach einem der Ansprüche 1 bis 3,
**dadurch gekennzeichnet, daß** die Carbonfasern durch Carbonisieren der Oberfläche von Fäden bzw. Fasern eines Trägerwerkstoffes gebildet sind.

6. Formkörper nach einem der Ansprüche 1 bis 5,
**dadurch gekennzeichnet, daß** die Carbonfasern (3, 3') zu Vliesen mit einem Flächengewicht von etwa 20 bis 40 g/m² übereinandergelegt sind.

7. Formkörper nach einem der Ansprüche 1 bis 6,
**dadurch gekennzeichnet, daß** die Carbonfasern (3, 3') einen Durchmesser von etwa 5 bis 10 µm und eine Länge von etwa 5 bis 15 mm aufweisen.

8. Formkörper nach einem der Ansprüche 1 bis 7,
**dadurch gekennzeichnet, daß** die vliesartig angeordneten Carbonfasern (3') vor dem Spritzgießverfahren vorgeformt sind.

9. Formkörper nach einem der Ansprüche 1 bis 8,
**dadurch gekennzeichnet, daß** ein von der Heizeinrichtung zu erwärmender Bereich des Formkörpers abhängig von der Umgebungstemperatur und/oder von der Temperatur des zu erwärmenden Bereiches über eine Regelungseinrichtung heizbar ist.

10. Formkörper nach einem der Ansprüche 1 bis 9,
**dadurch gekennzeichnet, daß** in der Stromleitung von oder zu den Carbonfasern (3, 3') ein Widerstandselement angeordnet ist, das seinen elektrischen Widerstand in Abhängigkeit vom hindurchfließenden elektrischen Strom oder seiner Temperatur verändert.

11. Formkörper nach Anspruch 10,
**dadurch gekennzeichnet, daß** das Widerstandselement ein Kaltleiter (PTC) oder ein strom- bzw. temperaturabhängig wirkender Schalter ist.

## Claims

1. A moulded member comprising a heating device, especially an exterior rearview mirror of a motor vehicle comprising a heating layer containing electrically connected carbon fibres stiffened by a binding agent and with power connections and reinforced in a pressing operation by a plastics material which penetrates into the spaces between the carbon fibres, which are disposed on one another to form a nonwoven mat, **characterised in that** after the carbon fibres (3, 3') have been stiffened by the binding agent, the spaces (11, 11') are open or only partly or completely closed by a thin layer, and in the case of a pressing operation in the form of an injection-moulding process the plastics material (4, 4'), which penetrates through the spaces (11, 11') and, if required, drives the thin layer out of the said spaces (11, 11'), is sprayed behind the carbon fibres (3, 3').

2. A moulded member according to claim 1, **characterised in that** the plastics material (4, 4') forms an insulating layer enclosing the carbon fibres (3, 3').

3. A moulded member according to claim 1 or claim 2, **characterised in that** the plastics material (4, 4') is a thermoplastics material, a thermosetting plastics material, an elastomer or a gel.

4. A moulded member according to any of claims 1 to 3 comprising carbon fibres in the form of individual fibres, **characterised in that** the individual fibres (carbon fibres 3, 3') are held in electrical contact by a binder before being stiffened by the binding agent.

5. A moulded member according to any of claims 1 to 3, **characterised in that** the carbon fibres are formed by carbonising the surface of threads or fibres of a substrate material.

6. A moulded member according to any of claims 1 to 5, **characterised in that** the carbon fibres (3, 3') are superposed to form nonwoven mats having a weight per unit area of about 20 to 40 g/m².

7. A moulded member according to any of claims 1 to 6, **characterised in that** the carbon fibres (3, 3') have a diameter of about 5 to 10 µm and a length of about 5 to 15 mm.

8. A moulded member according to any of claims 1 to 7, **characterised in that** the carbon fibres (3') arranged in a nonwoven mat are pre-shaped before the injection moulding process.

9. A moulded member according to any of claims 1 to 8, **characterised in that** a region of the moulded member for heating by the heating device is heatable via a control means in dependence on the ambient temperature and/or the temperature of the region for heating.

10. A moulded member according to any of claims 1 to 9, **characterised in that** a resistance element is disposed in the power line from or to the carbon fibres (3, 3') and its electric resistance varies in dependence on its temperature or the current flowing through it.

11. A moulded member according to claim 10, **characterised in that** the resistance element is a PTC resistor or a current or temperature-dependent switch.

## Revendications

1. Corps moulé comportant une installation de chauffage, notamment un rétroviseur extérieur d'un véhicule automobile, comprenant une couche chauffante comportant des fibres de carbone reliées électriquement et rigidifiées par un liant, ces fibres étant munies de branchements électriques et renforcées par une matière plastique par un procédé de compression, cette matière plastique pénétrant dans les espaces libres entre les fibres de carbone, fibres qui sont disposées les unes sur les autres à la manière d'un non-tissé,
**caractérisé en ce qu'**
après la rigidification des fibres de carbone (3, 3') par le liant, les espaces libres (11, 11') sont en partie ou en totalité ouverts ou fermés seulement par une mince couche et, lors du procédé de compression effectué comme procédé d'injection, la matière plastique (4, 4'), qui traverse les espaces libres (11, 11') et refoule le cas échéant la couche mince des espaces libres (11, 11'), arrive derrière les fibres de carbone (3, 3').

2. Corps moulé selon la revendication 1,
**caractérisé en ce que**
la matière plastique (4, 4') forme une couche d'isolation emprisonnant les fibres de carbone (3, 3').

3. Corps moulé selon l'une quelconque des revendications 1 ou 2,
**caractérisé en ce que**
la matière plastique (4, 4') est thermoplastique, thermodurcissable, un élastomère ou un gel.

4. Corps moulé selon l'une quelconque des revendications 1 à 3 avec des fibres de carbone formées par de courtes fibres séparées,
**caractérisé en ce que**
les fibres séparées (fibres de carbone 3, 3') sont tenues avant la rigidification par le liant, à l'aide d'un liant qui assure le contact électrique.

5. Corps moulé selon l'une quelconque des revendications 1 à 3,
**caractérisé en ce que**
les fibres de carbone sont formées par carbonisation de la surface des fils ou des fibres d'une matière de support.

6. Corps moulé selon l'une quelconque des revendications 1 à 5,
**caractérisé en ce que**
les fibres de carbone (3, 3') sont superposées pour former une nappe non tissée avec une densité surfacique de l'ordre de 20 à 40 g/m².

7. Corps moulé selon l'une quelconque des revendications 1 à 6,
**caractérisé en ce que**
les fibres de carbone (3, 3') ont un diamètre d'environ 5 à 10 µm et une longueur de l'ordre de 5 à 15 mm.

8. Corps moulé selon l'une quelconque des revendications 1 à 7,
**caractérisé en ce que**
les fibres de carbone (3') disposées à la manière d'un non-tissé sont préformées avant l'application du procédé d'injection.

9. Corps moulé selon l'une quelconque des revendications 1 à 8,
**caractérisé en ce qu'**
une zone du corps moulé qui doit être chauffée par l'installation de chauffage, peut être chauffée en fonction de la température ambiante et/ou de la température de la zone à chauffer par l'intermédiaire d'une installation de régulation.

10. Corps moulé selon l'une quelconque des revendications 1 à 9,
**caractérisé en ce que**
dans la ligne d'alimentation électrique des fibres de carbone (3, 3') il est prévu un élément résistant dont la résistance électrique varie en fonction du courant électrique qui passe ou de la température.

11. Corps moulé selon la revendication 10,
**caractérisé en ce que**
l'élément résistant est un conducteur froid (PTC) ou un interrupteur fonctionnant suivant l'intensité ou la température.
